# EUROPÄISCHE PATENTSCHRIFT

(11) **EP 3 960 662 B1**
(45) Veröffentlichungstag und Bekanntmachung des Hinweises auf die Patenterteilung: **06.11.2024**
(21) Anmeldenummer: 21192321.4
(22) Anmeldetag: 20.08.2021
(51) Int. Cl.: B65G 1/04

(54) **SYSTEM MIT EINEM REGALSHUTTLEFAHRZEUG UND EINEM LAGERREGAL**
SYSTEM COMPRISING A SHELF SHUTTLE VEHICLE AND A STORAGE SHELF
SYSTÈME DOTÉ D'UN CHARIOT DE RAYONNAGE ET UN RAYONNAGE D'ENTREPOSAGE

(30) Priorität: 25.08.2020 DE 102020122204
(43) Veröffentlichungstag der Anmeldung: 02.03.2022
(73) Patentinhaber: Jungheinrich Aktiengesellschaft, 22047 Hamburg (DE)
(72) Erfinder: Schmidt, Carsten, 21354 Bleckede (DE); Flottran, Dennis, 23881 Breitenfelde (DE)
(74) Vertreter: Hauck Patentanwaltspartnerschaft mbB

(56) Entgegenhaltungen:
- EP-A1- 2 722 687
- EP-A1- 3 312 131
- EP-A1- 3 466 843
- WO-A1-2015/131924

## Beschreibung

Die vorliegende Erfindung betrifft ein System, bestehend aus mindestens einem Regalshuttlefahrzeug und mindestens einem mit einem Paar von Lagerschienen ausgestatteten Lagerregal.

Derartige Systeme werden für ein automatisiertes Transportieren von Lasten in Regalebenen verwendet. Das Regalshuttlefahrzeug kann dabei eine in dem Regal gelagerte Last aufnehmen, diese verfahren und in einer gewünschten Position wieder absetzen. Das Regalshuttlefahrzeug verfährt dabei schienengebunden in dem Regal und unterfährt die Last, um diese aufzunehmen. Ein technisch wichtiger Aspekt hierbei ist, für das Fahrzeug zuverlässig das Regalende zu erkennen, so dass das Fahrzeug rechtzeitig zum Stillstand kommen kann und nicht über das Regalende hinausfährt.

Aus EP 2 308 777 B1 ist eine Radanordnung für ein Regalshuttle bekannt, das auf beiden Seiten mit einem berührungslosen Näherungssensor ausgestattet ist, der nach unten gerichtet ist und die Anwesenheit oder Abwesenheit einer Seitenwand detektiert. Hierauf ansprechend wird ein Ende der Regalschiene erkannt und das Regalshuttle gestoppt.

Aus DE 10 2008 022 323 A1 ist ein Shuttlebahnhof für ein Shuttle eines Shuttlekanallagers bekannt, bei dem ein mechanisches Anschlagblech am Kanalende vorgesehen ist, das für ein sich annäherndes Shuttlefahrzeug ein Herausfallen aus dem Kanal verhindert. Zudem schützt das Anschlagblech das Fahrzeug vor Beschädigungen durch Gabelstapler.

Aus WO 2015/131924 A1 ist ein Kanalfahrzeug bekannt geworden, bei dem eine Absturzsicherung des Fahrzeugs durch eine kontinuierliche Erfassung seiner Relativposition erfolgt. Die Relativposition wird hierbei beispielsweise relativ zu einem vorausfahrenden Fahrzeug oder relativ zu einem optisch erfassten Kanalende vorgenommen.

Aus WO 2015/131924 A1 ist ein Regallager mit einem Kanalfahrzeug für das Regallager bekannt geworden. Das Kanalfahrzeug ist mit drei Sensorelementen zur Überwachung einer ersten definierten Relativposition und mindestens einer zweiten definierten Relativposition des Kanalfahrzeugs ausgebildet. Die Relativpositionen beziehen sich jeweils auf das Kanalende.

Ebenso verwendet EP 3 466 843 Lichttaster zur Abstandsmessung, die eine Geschwindigkeitsreduktion bei Annäherung an ein Regalende auslöst.

Der vorliegenden Erfindung liegt die technische Aufgabe zugrunde, ein System, bestehend aus Regalshuttlefahrzeug und Lagerregal bereitzustellen, das mit einfachen Mitteln zuverlässig ein Abstürzen des Shuttlefahrzeugs verhindert.

Erfindungsgemäß wird die Aufgabe durch ein System mit den Merkmalen aus Anspruch 1 gelöst. Vorteilhafte Ausgestaltungen bilden die Gegenstände der Unteransprüche.

Das erfindungsgemäße System besitzt die Merkmale aus Anspruch 1. Das System besteht aus mindestens einem Regalshuttlefahrzeug und mindestens einem mit einem Paar von Lagerschienen ausgestatteten Lagerregal. Das Shuttlefahrzeug fährt in dem Lagerregal auf den Lagerschienen und kann Lasten aufnehmen, verfahren und wieder absetzen. Das mindestens eine Regalshuttlefahrzeug ist mit einem Laserscanner ausgestattet, der ein entlang einer Fahrtrichtung des Fahrzeugs liegendes Schutzfeld überwacht. Das Schutzfeld weist einen ersten Schutzbereich und mindestens einen zweiten Erkennungsbereich auf. Der erste Schutzbereich besitzt bevorzugt eine Breite quer zur Fahrzeuglängsrichtung, die kleiner als oder gleich der Fahrzeugbreite ist. Der zweite Erkennungsbereich kann über den ersten Schutzbereich hinaus gehen oder mit diesen zusammenfallen. Erfindungsgemäß sind endseitig der Lagerschienen Hinweiszeichen an dem Lagerregal angebracht, die bei einer Annäherung des Regalshuttlefahrzeugs mit dem zweiten Erkennungsbereich erfasst werden. Das erfasste Hinweiszeichen wird an die Fahrzeugsteuerung weitergeleitet, die entsprechend ein Weiterfahren des Shuttlefahrzeugs verhindert. Der besondere Vorteil des erfindungsgemäßen Systems liegt darin, dass dieses durch die Kombination von Hinweiszeichen und Erkennungsbereich des Laserscanners in verschiedensten Regalsystemen eingesetzt und insbesondere leicht nachgerüstet werden kann. Bei der Verwendung des geeigneten Shuttlefahrzeugs ist lediglich ein von dem Laserscanner und seinem Erkennungsbereich erfassbares Hinweiszeichen anzubringen. Bevorzugt kann der zweite Erkennungsbereich in Fahrzeugrichtung und/oder seitlich über den ersten Schutzbereich hinausgehen. Auf diese Weise wird bei einem Shuttlefahrzeug sichergestellt, dass das Hinweiszeichen erkannt werden kann.

In einer bevorzugten Weiterbildung ist ein dritter Erkennungsbereich vorgesehen, wobei zweiter und dritter Erkennungsbereich jeweils auf einer Seite des Shuttlefahrzeugs, bezogen auf die Fahrzeuglängsrichtung, angeordnet sind. Die Verwendung eines zweiten und dritten Erkennungsbereichs erlaubt insbesondere bei der Verwendung von jeweils einem Hinweiszeichen für jeden Erkennungsbereich eine zuverlässige und redundante Erkennung der Hinweiszeichen. Bevorzugt sind der oder die Erkennungsbereiche auf beiden Seiten zur Fahrzeuglängsrichtung überstehend ausgebildet und können so an Lagerregalen seitlich angebrachte Hinweiszeichen erfassen. In dieser Ausgestaltung sind zwei Hinweiszeichen vorgesehen, die seitlich im Lagerregal angeordnet sind. Je nach Ausgestaltung des Erkennungsbereichs in einen zweiten und dritten Erkennungsbereich oder in ausschließlich einen zweiten Erkennungsbereich gehen diese seitlich und/oder über den ersten Schutzbereich in Fahrtrichtung hinaus und können so die Hinweiszeichen vor deren Eintritt in den Schutzbereich erfassen.

Erfindungsgemäß sind die Hinweiszeichen als ein Regalendezeichen ausgebildet, das in einem vorbestimmten Abstand vor einem Ende der Regalschiene an dem Lagerregal angebracht ist. Das Regalendezeichen wird im Erkennungsbereich einfach erkannt, wobei hierfür es nicht notwendig ist, dass irgendein Inhalt des Regalendezeichens gelesen oder erfasst wird. In der einfachsten Form genügt es, wenn überhaupt ein Zeichen als Gegenstand in den zweiten und/oder dritten Erkennungsbereich eintritt.

Bevorzugt erkennt die Fahrzeugsteuerung ein Regalende dann, wenn zwei Regalenden innerhalb einer vorbestimmten Zeitspanne, bevorzugt auf unterschiedlichen Seiten, erfasst werden. Für das Erfassen auf unterschiedlichen Seiten sind bevorzugt zwei Erkennungsbereiche vorgesehen, die die zwei Regalendezeichen auf unterschiedlichen Seiten erfassen. Das Erfassen auf unterschiedlichen Seiten und von zwei Regalendezeichen innerhalb einer vorbestimmten Zeitspanne bietet den Vorteil, dass die Messergebnisse plausibilitiert werden. Ein unbeabsichtigtes Stoppen des Regalshuttlefahrzeugs aufgrund einer Fehlmessung kann so sehr weitgehend ausgeschlossen werden.

Bevorzugt ist aus Sicherheitsgründen vorgesehen, dass, wenn ein zweites Regalendezeichen nicht innerhalb der vorbestimmten Zeitspanne erfasst wird, eine Sicherheitsfunktion für den oder die Erkennungsbereiche aktiviert wird. Durch das Einschalten der Sicherheitsfunktion arbeiten die Erkennungsbereiche ebenso wie der erste Schutzbereich, so dass das Regalshuttlefahrzeug gestoppt wird, wenn eine Person oder ein Hindernis in dem oder den Erkennungsbereichen erfasst wird. In der vorstehenden Situation, in der zwei Regalendezeichen nicht innerhalb einer vorbestimmten Zeitspanne erfasst werden, erhöht das Regalshuttlefahrzeug seine Sicherheitsvorkehrungen und schaltet die Erkennungsbereiche um, so dass diese sich entsprechend wie der Schutzbereich verhalten.

In einer bevorzugten Weiterbildung entspricht der erste Schutzbereich einer Gassenbreite zwischen den Lagerschienen. Auf diese Weise stellt der erste Schutzbereich fest, falls sich eine Person oder ein Gegenstand zwischen den Lagerschienen befindet. Damit wird eine Kollision mit dem Regalshuttlefahrzeug verhindert.

Bevorzugt ist die Fahrzeugsteuerung dazu ausgebildet, bei erfassten Regalendezeichen die Fahrgeschwindigkeit zu reduzieren und das Regalshuttlefahrzeug mit reduzierter Geschwindigkeit am Regalende zum Halten zu bringen. Die Fahrzeugsteuerung kann hierbei Geschwindigkeit und Beladung des Shuttlefahrzeugs berücksichtigen, um ein Weiterfahren über das Regalende hinaus zu verhindern. In einer bevorzugten Weiterbildung wird bei einer Annäherung an das Regalende aufgrund der erkannten Regalendezeichen der erste Schutzbereich für das Fahrzeug deaktiviert. Auf diese Weise wird sichergestellt, dass das sich an das Regalendezeichen annähernde Shuttlefahrzeug nicht durch einen vom ersten Schutzbereich ausgelösten Notstopp vor dem Regalende zum Stillstand kommt.

In einer bevorzugten Ausgestaltung sind die Hinweiszeichen so angeordnet, dass sie in einen Bereich zwischen den Lagerschienen vorstehen. Nach Möglichkeit behindern sie ein Be- und Entladen des Shuttlefahrzeugs nicht.

Ein bevorzugtes Ausführungsbeispiel wird nachfolgend näher erläutert. Es zeigen:
- Fig. 1a,: b ein Regalshuttlefahrzeug in einem Schutzfeld in zwei unterschiedlichen Relativpositionen,
- Fig. 2a, b: das Regalshuttlefahrzeug mit einer Palette in seinen Frontansichten und

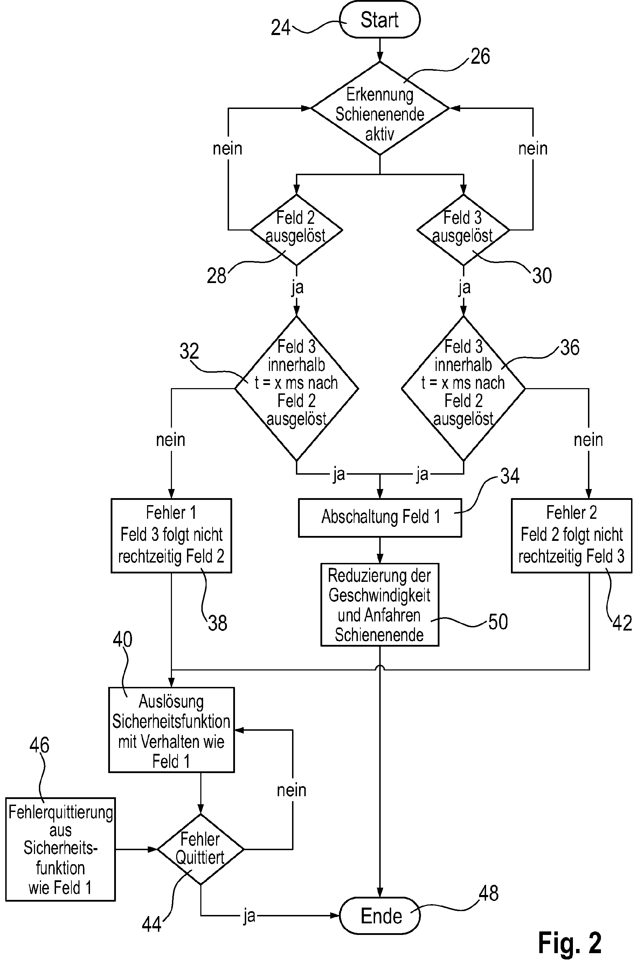

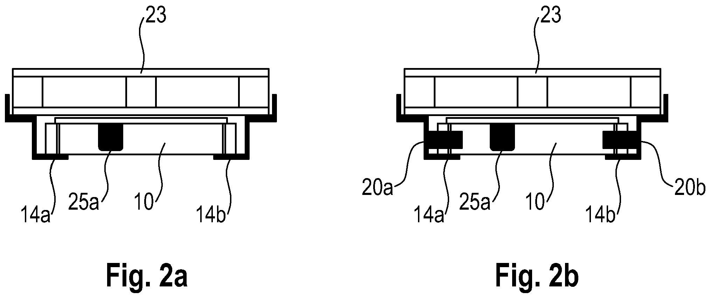

- Fig. 2: ein Blockdiagramm, das den Ablauf der Signalverarbeitung zeigt.

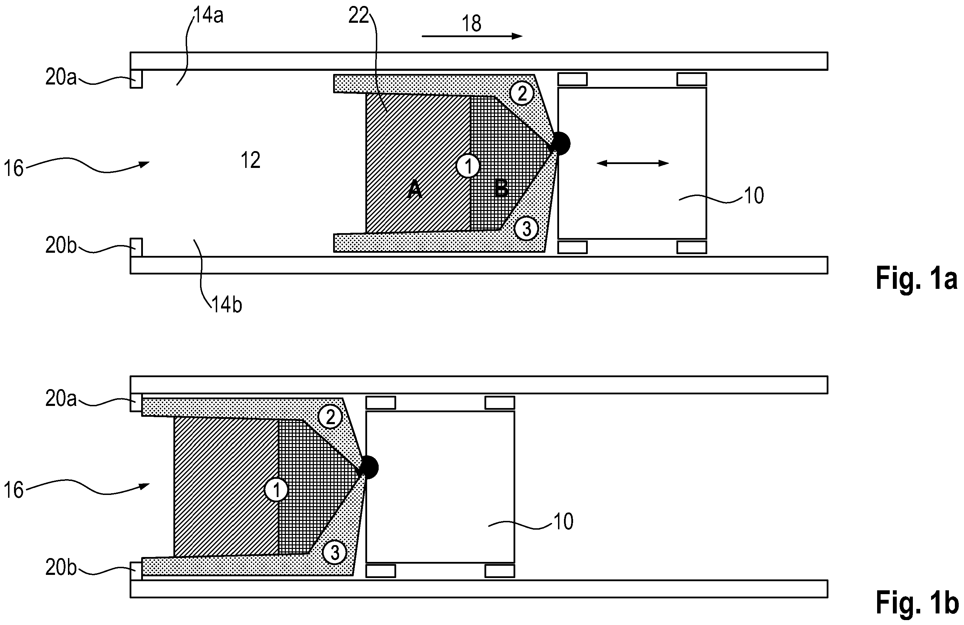

Fig. 1a zeigt in einer schematischen Ansicht von oben ein Regalshuttlefahrzeug 10. Ein solches Regalshuttlefahrzeug 10 fährt in einem Lagerkanal 12, der von Lagerschienen 14a, 14b begrenzt ist. Der Lagerkanal 12 ist beispielsweise in einem Lagergerüst angeordnet, wobei dort eine Vielzahl von parallel laufenden Lagerkanälen übereinander und nebeneinander angeordnet sind. In jedem der Lagerkanäle können Waren, bevorzugt auf Paletten oder anderen Lastträgern, gelagert werden. Angeliefert werden diese über einen Gabelstapler, der diese in den Lagerkanal oder auf das Regalshuttlefahrzeug 10 setzt. Das Regalshuttlefahrzeug 10 fährt dann mit der Ware entlang dem Lagerkanal, um diese an eine gewünschte Position zu bringen und dort abzusetzen.

Die Figuren 2a und 2b zeigen ein Regalshuttlefahrzeug 10, das auf zwei parallelen Lagerschienen 14a, 14b fährt, in jeweils einer Frontansicht. Die Lagerschienen 14a, 14b besitzen jeweils eine Abstellfläche für eine Palette 23. Das Regalshuttlefahrzeug 10 fährt auf den Lagerschienen 14a, 14b unterhalb der Palette 23 und kann diese durch eine entsprechende Hubeinrichtung anheben. Im angehobenen Zustand der Palette 23 kann das Regalshuttlefahrzeug 10 diese in dem Lagerkanal verfahren und an einer gewünschten Stelle auf den Lagerschienen 14a, 14b absetzen, sofern diese natürlich frei sind. Figur 2b zeigt zudem deutlich die Regalendezeichen 20a, 20b, die entsprechend erfasst werden. An dem Regalshuttlefahrzeug 10 sind die Laserscanner 25a und 25b jeweils in Fahrtrichtung angebracht.

In den schematischen Darstellungen der Fign. 1a und 1b erfolgt der Zugang zu dem Lagerregal über die Öffnung 16. Von hier aus werden die einzulagernden Waren in Richtung 18 in den Lagerkanal transportiert. Im Bereich der Öffnung 16 sind in den Fign. 1a, 1b die Regalendezeichen 20a, 20b schematisch dargestellt. Diese Regalendezeichen sind keine Hindernisse oder Sperren, sondern in den Bereich des Kanals 12 vorstehende Zeichen, beispielsweise in Form eines Blechs oder eines anderen Gegenstandes, die von dem Schutzfeld 22 des Regalshuttlefahrzeugs 10 erkannt werden. Das Schutzfeld 22 ist hierbei einem Sensor zugeordnet, der beispielsweise als ein Laserscanner ausgebildet sein kann. Der Laserscanner ist bevorzugt im vorderen Bereich des Regalshuttlefahrzeugs 10 angeordnet. Da das Regalshuttlefahrzeug 10 zwei Fahrtrichtungen besitzt sind insgesamt zwei Laserscanner auf beiden Seiten vorliegend. Die Geometrie der Schutzbereiche und der Erkennungsbereiche des Laserscanners sind in dem Laserscanner selbst oder in der Fahrzeugsteuerung hinterlegt. Zudem sind auch die zu ergreifenden Maßnahmen bei Verletzung eines der Bereiche hinterlegt. Das Schutzfeld 22 besitzt einen ersten Schutzbereich 1, einen zweiten Erkennungsbereich 2 und einen dritten Erkennungsbereich 3. Die unterschiedliche Darstellung des ersten Schutzbereichs 1 macht deutlich, dass dieser noch einmal in zwei Unterschutzbereiche A und B unterteilt ist.

Fig. 1b zeigt die Situation, dass die Erkennungsbereiche 2 und 3 an die Regalendezeichen 20a, 20b stoßen. Treten die Regalendezeichen 20a, 20b in die Erkennungsbereiche 2, 3 ein, so kann die Fahrzeugsteuerung bestimmen, in welchem Abstand sich das Regalshuttlefahrzeug 10 von dem Regalende mit seiner Öffnung 16 befindet.

Fig. 2 zeigt in einem Blockdiagramm einen Ablaufplan, der in Schritt 24 beginnt. In dem Verfahrensschritt 26 wird die Schienenenderkennung aktiviert, das bedeutet, die Erkennungsbereiche 2 und 3 werden durch den Laserscanner aktiviert. In Schritt 28 wird abgefragt, ob der Erkennungsbereich 2 ausgelöst wurde. Wurde dieser nicht ausgelöst, so kehrt das Verfahren zu Schritt 26 zurück. Ebenso wird in Schritt 30 abgefragt, ob der Erkennungsbereich 3 ausgelöst wurde. Wurde er nicht ausgelöst, so kehrt das Verfahren zu Schritt 26 zurück.

In Schritt 32, wenn in Schritt 28 der Erkennungsbereich 2 ausgelöst hat, wird überprüft, ob innerhalb einer vorgegebenen Zeitspanne der andere Erkennungsbereich, also der Erkennungsbereich 3 ausgelöst hat. Ist dies der Fall, so wird in Schritt 34 der erste Schutzbereich 1 ausgeschaltet. Analoges passiert in Schritt 36, indem nach Auslösen des Erkennungsbereichs 3 geprüft wird, ob innerhalb einer vorbestimmten Zeitspanne der Erkennungsbereich 2 auslöst. Ist dies der Fall, so wird in Schritt 34 der Schutzbereich 1 ausgeschaltet. Dies bedeutet, dass der Schutzbereich 1 insgesamt dann abgeschaltet wird, wenn innerhalb der vorgegebenen Zeitspanne auch der andere Erkennungsbereich anspricht. Dies ist notwendig, da ansonsten der Schutzbereich 1 beim Annähern an das Regalende den oder die Endanschläge als Hindernis erkennen und in der Folge einen ungewollten Notstopp auslösen könnte. Außerdem würde der Schutzbereich 1 beim Annähern an das Regalende über das Regalende hinausragen und möglicherweise Gegenstände außerhalb des Regals detektieren, was ebenfalls zu einem ungewollten Notstopp führen könnte.

Der Zustand 38 tritt auf, wenn der Erkennungsbereich 3 nicht innerhalb der vorbestimmten Zeitspanne auslöst. In diesem Fall wird die Sicherheitsfunktion 40 ausgelöst, bei der die Erkennungsbereiche 2 und 3 die gleiche Funktionalität besitzen, wie der Schutzbereich 1. Ebenso verhält es sich im Zustand 42, in dem der Erkennungsbereich 2 nicht innerhalb der vorbestimmten Zeitspanne nach Erkennungsbereich 3 auslöst. Auch in diesem Fall wird die Sicherheitsfunktion 40 aktiviert. Die Sicherheitsfunktion 40 wird solange beibehalten, bis in Schritt 44 der Fehler 38 oder 42 quittiert ist. Die Fehlerquittierung 46 erfolgt über die Fahrzeugsteuerung entsprechend der Fehlerquittierung des Schutzbereichs 1. Mit Schritt 48 endet das Verfahren.

Wurde in Schritt 34 der Schutzbereich 1 abgeschaltet, weil die Erkennungsbereiche 2 und 3 in der vorbestimmten Zeitspanne angesprochen haben, so wird in Schritt 50 das Anfahren an das Regalende eingeleitet. Wie in Fig. 1b dargestellt, ist der Abstand zwischen den Regalendezeichen 20a, 20b bekannt, so dass die Fahrzeugsteuerung unter Berücksichtigung der Fahrgeschwindigkeit und einer eventuell auf dem Regalshuttlefahrzeug 10 befindlichen Last das Regalende 16 anfahren kann.

Der Schutzbereich 1 teilt sich in einen Bereich A und B auf. Bei Auftreten eines Hindernisses oder Gegenstandes im Bereich A wird eine erste Steuerfunktion, beispielsweise ein Bremsvorgang mittlerer Stärke ausgelöst. Im Bereich B des ersten Schutzbereichs wird aufgrund der größeren Nähe zum Regalshuttlefahrzeug eine Notbremsung ausgelöst, um in möglichst kurzer Strecke zum Stillstand zu kommen.

### Bezugszeichenliste

- 1: Schutzbereich
- 2: Erkennungsbereich
- 3: Erkennungsbereich
- 10: Regalshuttlefahrzeug
- 12: Lagerkanal
- 14a: Lagerschiene
- 14b: Lagerschiene
- 16: Öffnung
- 18: Richtung
- 20a: Regalendezeichen
- 20b: Regalendezeichen
- 22: Schutzfeld
- 23: Palette
- 24: Beginn des Ablaufplans
- 25a: Laserscanner
- 25b: Laserscanner
- 26: Verfahrensschritt
- 28: Verfahrensschritt
- 30: Verfahrensschritt
- 32: Verfahrensschritt
- 34: Verfahrensschritt
- 36: Verfahrensschritt
- 38: Zustand
- 40: Sicherheitsfunktion
- 42: Zustand
- 44: Verfahrensschritt
- 46: Fehlerquittierung
- 48: Verfahrensschritt
- 50: Verfahrensschritt
- A: Unterschutzbereich
- B: Unterschutzbereich

## Patentansprüche

1. System bestehend aus mindestens einem Regalshuttlefahrzeug (10) mit einer Fahrzeugsteuerung und mindestens einem mit einem Paar von Lagerschienen (14a, 14b) ausgestatteten Lagerregal, in dem das Regalshuttlefahrzeug (10) Lasten aufnehmen, verfahren und absetzen kann, wobei das mindestens eine Regalshuttlefahrzeug (10) einen Laserscanner aufweist, der ein entlang einer Fahrtrichtung des Fahrzeugs liegendes Schutzfeld (22) überwacht, das mindestens einen ersten Schutzbereich (1) und mindestens einen zweiten Erkennungsbereich (2) aufweist, wobei der erste Schutzbereich (1) eine Breite quer zur Fahrzeuglängsrichtung besitzt, die kleiner als oder gleich der Fahrzeugbreite ist, wobei endseitig der Lagerschienen (14a 14b) Hinweiszeichen an den Lagerregalen angebracht sind, die bei einer Annährung des Regalshuttlefahrzeugs (10) in dem zweiten Erkennungsbereich (2) erfasst und als erfasste Hinweiszeichen an die Fahrzeugsteuerung weitergeleitet werden.

2. System nach Anspruch 1, **dadurch gekennzeichnet, dass** der zweite Erkennungsbereich (2) in Fahrtrichtung über den ersten Schutzbereich (1) hinausgeht.

3. System nach Anspruch 1 oder 2, **dadurch gekennzeichnet, dass** der zweite Erkennungsbereich (2) seitlich über den ersten Schutzbereich (1) hinausgeht.

4. System nach Anspruch 1, **dadurch gekennzeichnet, dass** der zweite Erkennungsbereich (2) mit dem ersten Schutzbereich (1) zusammenfällt.

5. System nach Anspruch 1, **dadurch gekennzeichnet, dass** ein dritter Erkennungsbereich (3) vorgesehen ist, wobei zweiter und dritter Erkennungsbereich (2, 3) jeweils auf einer Seite des Regalshuttlefahrzeugs (10) bezogen auf die Fahrzeuglängsrichtung angeordnet sind.

6. System nach Anspruch 1 oder 2, **dadurch gekennzeichnet, dass** der oder die Erkennungsbereiche (2, 3) auf beiden Seiten zur Fahrzeuglängsrichtung überstehen und an seitlichen Lagerregalen angebrachte Hinweiszeichen erfassen können.

7. System nach einem der Ansprüche 1 bis 3, **dadurch gekennzeichnet, dass** als Hinweiszeichen ein Regalendezeichen (20a, 20b) in einem vorbestimmten Abstand vor einem Ende der Regalschienen (14a, 14b) an dem Lagerregal angebracht ist.

8. System nach Anspruch 4, **dadurch gekennzeichnet, dass** die Fahrzeugsteuerung ein Regalende nur dann erkennt, wenn zwei Regalendezeichen (20a, 20b) innerhalb einer vorbestimmten Zeitspanne erfasst werden.

9. System nach Anspruch 5, **dadurch gekennzeichnet, dass** ein zweiter und dritter Erkennungsbereich (2, 3) vorliegen, die die zwei Regalendezeichen (20a, 20b) auf unterschiedlichen Seiten erfassen.

10. System nach Anspruch 4 oder 5, **dadurch gekennzeichnet, dass** wenn ein zweites Regalendezeichen (20b) nicht innerhalb der vorbestimmten Zeitspanne erfasst wird, eine Sicherheitsfunktion (40) für dem oder die Schutzbereiche aktiviert wird.

11. System nach Anspruch 7, **dadurch gekennzeichnet, dass** die Sicherheitsfunktion (40) vorsieht, dass das Regalshuttlefahrzeug (10) gestoppt wird, wenn eine Person oder ein Hindernis in der oder den Erkennungsbereichen (2, 3) erfasst wird.

12. System nach einem der Ansprüche 1 bis 6, **dadurch gekennzeichnet, dass** der erste Schutzbereich (1) einer Gassenbreite zwischen den Lagerschienen (14a, 14b) entspricht.

13. System nach einem der Ansprüche 4 bis 7, **dadurch gekennzeichnet, dass** die Fahrzeugsteuerung dazu ausgebildet ist, bei erfasstem Regalendezeichen (20a, 20b) die Fahrgeschwindigkeit zu reduzieren und das Regalshuttlefahrzeug (10) mit reduzierter Geschwindigkeit am Regalende zum Halten zu bringen.

14. System nach Anspruch 10, **dadurch gekennzeichnet, dass** bei einer Annäherung an das Regalende der erste Schutzbereich (1) deaktiviert ist.

15. System nach einem der vorstehenden Ansprüche, **dadurch gekennzeichnet, dass** das oder die Hinweiszeichen in den Bereich zwischen den Lagerschienen (14a, 14b) vorstehen.

## Claims

1. A system consisting of at least one shelf shuttle vehicle (10) comprising a vehicle controller and at least one storage shelf equipped with a pair of storage rails (14a, 14b), in which the shelf shuttle vehicle (10) can pick up, move, and set down loads, wherein the at least one shelf shuttle vehicle (10) has a laser scanner, which monitors a field of protection (22) that lies along a direction of travel of the vehicle and has at least one first protection region (1) and at least one second detection region (2), wherein the first protection region (1) has a width transverse to the longitudinal direction of the vehicle that is less than or equal to the width of the vehicle, wherein indication signs are attached to the storage shelves at the ends of the storage rails (14a, 14b) and are detected in the second detection region (2) when the shelf shuttle vehicle (10) approaches and are forwarded to the vehicle controller as detected indication signs.

2. The system according to claim 1, **characterized in that** the second detection region (2) extends past the first protection region (1) in the direction of travel.

3. The system according to claim 1 or 2, **characterized in that** the second detection region (2) extends laterally past the first protection region (1).

4. The system according to claim 1, **characterized in that** the second detection region (2) coincides with the first protection region (1).

5. The system according to claim 1, **characterized in that** a third detection region (3) is provided, wherein the second and the third detection region (2, 3) are each arranged on a side of the shelf shuttle vehicle (10) with reference to the longitudinal direction of the vehicle.

6. The system according to claim 1 or 2, **characterized in that** the detection region(s) (2, 3) protrude on both sides relative to the longitudinal direction of the vehicle and can detect indication signs attached to lateral storage shelves.

7. The system according to one of claims 1 to 3, **characterized in that** a shelf end sign (20a, 20b) is attached to the storage shelf as an indication sign at a predetermined distance before an end of the shelf rails (14a, 14b).

8. The system according to claim 4, **characterized in that** the vehicle controller only recognizes an end of the shelf when two shelf end signs (20a, 20b) are detected within a predetermined period of time.

9. The system according to claim 5, **characterized in that** a second and third detection region (2, 3) are present, which detect the two shelf end signs (20a, 20b) on different sides.

10. The system according to claim 4 or 5, **characterized in that** a safety function (40) for the protection region(s) is activated when a second shelf end sign (20b) is not detected within the predetermined period of time.

11. The system according to claim 7, **characterized in that** the safety function (40) provides that the shelf shuttle vehicle (10) is stopped when a person or an obstacle is detected in the detection region(s) (2, 3).

12. The system according to one of claims 1 to 6, **characterized in that** the first protection region (1) corresponds to an aisle width between the storage rails (14a, 14b).

13. The system according to one of claims 4 to 7, **characterized in that** the vehicle controller is designed to reduce the speed of travel and bring the shelf shuttle vehicle (10) to a stop at the end of the shelf at a reduced speed when the shelf end sign (20a, 20b) is detected.

14. The system according to claim 10, **characterized in that** the first protection region (1) is deactivated when the end of the shelf is approached.

15. The system according to one of the preceding claims, **characterized in that** the indication sign(s) project into the region between the storage rails (14a, 14b).

## Revendications

1. Système constitué d'au moins un chariot de rayonnage (10) doté d'une commande de véhicule et d'au moins une étagère d'entreposage équipée d'une paire de rails d'entreposage (14a, 14b), dans lequel le chariot de rayonnage (10) peut recevoir, déplacer et déposer des charges, dans lequel l'au moins un chariot de rayonnage (10) présente un scanner laser surveillant un champ de protection (22) situé le long d'une direction de déplacement du véhicule, lequel présente au moins une première zone de protection (1) et au moins une deuxième zone de reconnaissance (2), dans lequel la première zone de protection (1) possède une largeur transversalement à la direction longitudinale du véhicule, laquelle est inférieure ou égale à la largeur de véhicule, dans lequel des symboles sont placés sur les étagères d'entreposage côté extrémité des rails d'entreposage (14a, 14b), lesquels sont détectés lorsque le chariot de rayonnage (10) se rapproche dans la deuxième zone de reconnaissance (2) et transmis à la commande de véhicule en tant que symboles détectés.

2. Système selon la revendication 1, **caractérisé en ce que** la deuxième zone de reconnaissance (2) s'étend au-delà de la première zone de protection (1) dans la direction de déplacement.

3. Système selon la revendication 1 ou 2, **caractérisé en ce que** la deuxième zone de reconnaissance (2) s'étend latéralement au-delà de la première zone de protection (1).

4. Système selon la revendication 1, **caractérisé en ce que** la deuxième zone de reconnaissance (2) coïncide avec la première zone de protection (1).

5. Système selon la revendication 1, **caractérisé en ce qu'**il est prévu une troisième zone de reconnaissance (3), dans lequel la deuxième et la troisième zone de reconnaissance (2, 3) sont disposées respectivement sur un côté du chariot de rayonnage (10) par rapport à la direction longitudinale de véhicule.

6. Système selon la revendication 1 ou 2, **caractérisé en ce que** la ou les zones de reconnaissance (2, 3) dépassent de part et d'autre de la direction longitudinale du véhicule et peuvent détecter des symboles placés sur des étagères d'entreposage latérales.

7. Système selon l'une des revendications 1 à 3, **caractérisé en ce qu'**un signe de fin d'étagère (20a, 20b) est placé en tant que symbole sur l'étagère d'entreposage à une distance prédéterminée avant une extrémité des rails d'entreposage (14a, 14b).

8. Système selon la revendication 4, **caractérisé en ce que** la commande de véhicule reconnaît une extrémité d'étagère seulement lorsque deux signes de fin d'étagère (20a, 20b) sont détectés dans un laps de temps prédéterminé.

9. Système selon la revendication 5, **caractérisé en ce qu'**il est prévu une deuxième et une troisième zone de reconnaissance (2, 3), lesquelles détectent deux signes de fin d'étagère (20a, 20b) sur des côtés distincts.

10. Système selon la revendication 4 ou 5, **caractérisé en ce que** lorsqu'un deuxième signe de fin d'étagère (20b) n'est pas détecté dans le laps de temps prédéterminé, une fonction de sécurité (40) pour la ou des zones de protection est activée.

11. Système selon la revendication 7, **caractérisé en ce que** la fonction de sécurité (40) prévoit que le chariot de rayonnage (10) doit être arrêté lorsqu'une personne ou un obstacle est détecté(e) dans la ou les zones de reconnaissance (2, 3).

12. Système selon l'une des revendications 1 à 6, **caractérisé en ce que** la première zone de protection (1) correspond à une largeur de voie entre les rails d'entreposage (14a, 14b).

13. Système selon l'une des revendications 4 à 7, **caractérisé en ce que** la commande de véhicule est conçue pour réduire la vitesse de véhicule lors de la détection d'un signe d'extrémité d'étagère (20a, 20b) et pour amener le chariot de rayonnage (10) à s'arrêter avec une vitesse réduite à l'extrémité de l'étagère.

14. Système selon la revendication 10, **caractérisé en ce que** la première zone de protection (1) est désactivée lors de l'approche de l'extrémité de l'étagère.

15. Système selon l'une des revendications précédentes, **caractérisé en ce que** le ou les symboles dépassent dans la région entre les rails d'entreposage (14a, 14b).
